# DEMANDE DE BREVET EUROPEEN

(11) **EP 4 195 362 A1**
(43) Date de publication de la demande: **14.06.2023**
(21) Numéro de dépôt: 22208231.5
(22) Date de dépôt: 18.11.2022
(51) Int. Cl.: H01M 10/625, B60L 50/64, H01M 50/249, H01M 50/291, H01M 10/6569, H01M 50/211

(54) **MODULE POUR BATTERIE COMPRENANT UN MOYEN DE SÉPARATION ENTRE DES CELLULES ET UN CONDENSEUR**

(30) Priorité: 08.12.2021 FR 2113128
(71) Demandeur: Renault s.a.s, 92100 Boulogne Billancourt (FR)
(72) Inventeur: FIARD, Jean michel, 78084 GUYANCOURT (FR); YU, Robert, 78084 GUYANCOURT (FR)

(57) **Abrégé**

L'invention porte sur un module (51) pour une batterie, le module (51) comprenant une enceinte (10), des cellules (2) au sein de l'enceinte (10), un condenseur (4), le condenseur (4) étant agencé au sein de l'enceinte (10) au-dessus des cellules (2), un matériau (7) apte à passer d'une phase liquide à une phase vapeur et vice versa selon des conditions de température et/ou de pression, notamment un matériau (7) diélectrique, le matériau (7) occupant un volume (V) disponible au sein de l'enceinte (10), notamment au-dessus et/ou autour des cellules (2), le module (51) comprenant un moyen de séparation ajouré (6) s'étendant entre les cellules (2) et le condenseur (4).

## Description

### Domaine technique de l'invention

L'invention concerne un module pour batterie. L'invention porte encore sur une batterie comprenant un tel module. L'invention porte encore sur un véhicule comprenant un tel module ou une telle batterie.

### Etat de la technique antérieure

Un véhicule électrique ou hybride, par exemple un véhicule automobile, comprend une batterie. Une telle batterie, par exemple de traction et/ou de propulsion, comprend généralement un ou plusieurs modules. De tels modules comprennent chacun plusieurs cellules électrochimiques de stockage d'énergie électrique. De telles cellules ont besoin d'être refroidies pour maximiser leurs performances, en particulier en termes d'autonomie et de rapidité de recharge. Les cellules d'un module de batterie sont alors immergées dans un matériau diélectrique à changement de phases afin d'assurer leur refroidissement. Ainsi, un tel fluide entoure voire recouvre les cellules.

Seulement, le fait que les cellules nécessitent d'être immergées constamment engendre une hauteur conséquente pour un tel module. Or, généralement, une batterie est agencée au niveau du plancher d'un véhicule qui dispose d'un espace restreint, en particulier suivant la direction verticale.

Ainsi, il convient de diminuer la hauteur d'un module de batterie de sorte à pouvoir réduire l'encombrement total de la batterie sans nuire aux performances d'une telle batterie, en particulier sans impacter sa capacité à refroidir.

Dans ce but, le document US20200259231A1 décrit un dispositif complexe, coûteux et difficile à intégrer sur un véhicule, utilisant notamment plusieurs condenseurs.

### Présentation de l'invention

Le but de l'invention est de fournir un module remédiant aux inconvénients ci-dessus. En outre l'invention propose un module contenant un volume de matériau à changement de phase moindre.

### Résumé de l'invention

Pour atteindre cet objectif l'invention porte sur un module pour une batterie, le module comprenant :
- une enceinte,
- des cellules au sein de l'enceinte,
- un condenseur, le condenseur étant agencé au sein de l'enceinte au-dessus des cellules,
- un matériau apte à passer d'une phase liquide à une phase vapeur et vice versa selon des conditions de température et/ou de pression, notamment un matériau diélectrique, le matériau occupant un volume disponible au sein de l'enceinte, notamment au-dessus et/ou autour des cellules,
le module comprenant un moyen de séparation ajouré s'étendant entre les cellules et le condenseur.

Le moyen de séparation ajouré peut comprendre des premières parois et des deuxièmes parois destinées à s'étendre verticalement ou sensiblement verticalement, notamment sur toute une épaisseur du moyen de séparation ajouré, de sorte à créer des orifices entre les premières et deuxièmes parois.

Les premières parois peuvent être orthogonales par rapport aux deuxièmes parois entre elles de sorte que les orifices ont une section carrée et/ou rectangulaire.

Le moyen de séparation ajouré peut avoir une épaisseur comprise entre 0.5 mm et 5 mm, notamment entre 1 mm et 3 mm.

L'enceinte peut comprendre une zone au niveau de chaque arête intérieure destinée à s'étendre verticalement ou sensiblement verticalement et chaque zone de l'enceinte peut être libre de sorte à faciliter la descente du matériau en phase liquide, et la montée du matériau en phase vapeur.

Le moyen de séparation ajouré peut comprendre des coins, chaque coin pouvant comprendre une encoche destinée à laisser libre chaque zone de l'enceinte.

Le module peut comprendre des conduits, chaque conduit pouvant être ménagé au niveau de chaque zone de sorte à faciliter le déplacement du matériau vers le haut et/ou vers le bas du module.

Chaque conduit peut avoir une section selon un plan horizontal apte à épouser chaque zone, notamment une section carrée ou rectangulaire.

L'invention porte encore sur une batterie comprenant au moins un module tel que défini précédemment.

L'invention porte encore sur un véhicule, notamment un véhicule automobile, comprenant une batterie telle que définie précédemment, ou un module tel que défini précédemment.

### Présentation des figures

Ces objets, caractéristiques et avantages de la présente invention seront exposés en détail dans la description suivante d'un mode de réalisation et d'une variante, faite à titre non-limitatif en relation avec les figures jointes parmi lesquelles :
[Fig. 1] La figure 1 est une vue schématique d'un véhicule selon un mode de réalisation.
[Fig. 2] La figure 2 est une vue en coupe selon un plan vertical d'un module de batterie selon un mode de réalisation.
[Fig. 3] La figure 3 est une vue en coupe selon un plan vertical d'un module de batterie selon une variante du mode de réalisation.
[Fig. 4] La figure 4 est la vue en coupe selon le plan vertical du module de batterie selon la variante du mode de réalisation, le module étant incliné.
[Fig. 5] La figure 5 est une vue de détail en coupe selon le plan vertical d'une partie supérieure du module selon le mode de réalisation ou la variante, le module étant incliné.
[Fig. 6] La figure 6 est une vue en coupe selon un plan horizontal du module de batterie selon le mode de réalisation.
[Fig. 7] La figure 7 est une vue schématique partielle de dessus d'un module de batterie selon le mode de réalisation.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

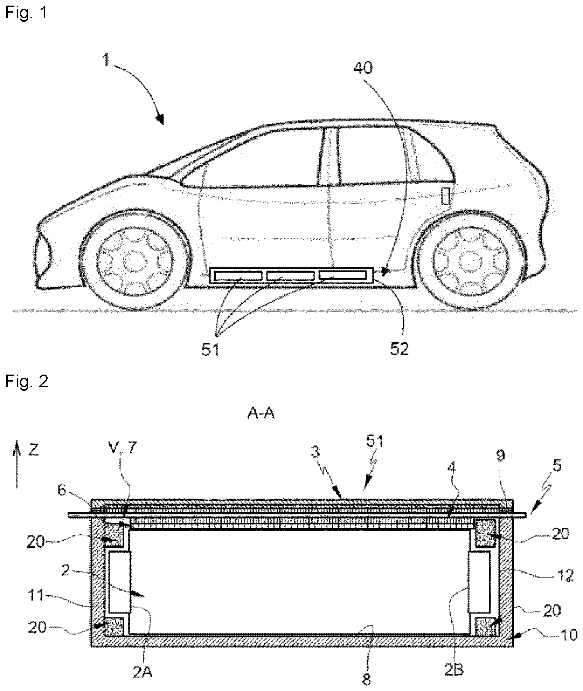

Comme illustré sur la figure 1, un véhicule, par exemple un véhicule automobile 1, comprend une batterie 52. Le véhicule ou la batterie 52 comprend au moins un module 51. De préférence la batterie 52 comprend plusieurs modules 51, par exemple agencés côte à côte, par exemple en étant en contact ou sensiblement en contact entre eux. Le véhicule comprend de préférence un plancher 40. La batterie est avantageusement agencée au niveau du plancher 40, notamment afin d'abaisser le centre de gravité du véhicule.

Plus précisément, comme illustré sur la figure 2, le module 51 comprend une enceinte 10. Par exemple, l'enceinte 10 est parallélépipédique ou sensiblement parallélépipédique. De préférence, l'enceinte comprend un fond 8. Dans ce cas, l'enceinte 10 comprend une première paroi 11 et une deuxième paroi 12. La première paroi 11 et la deuxième paroi 12 sont opposées et parallèles, ou sensiblement parallèles, l'une par rapport à l'autre. Le module 51 comprend encore des cellules 2. Chaque cellule 2 comprend une première face 2A et une deuxième face 2B. La première face 2A et la deuxième face 2B sont opposées et parallèles, ou sensiblement parallèles, l'une par rapport à l'autre. Les cellules 2 sont disposées au sein de l'enceinte 10 de sorte que la première face 2A de chaque cellule 2 se trouve en face de la première paroi 11 de l'enceinte et de sorte que la deuxième face 2B de chaque cellule 2 se trouve en face de la deuxième paroi 12 de l'enceinte 10. Avantageusement, chaque cellule 2 est parallélépipédique. De préférence, toutes les cellules 2 ont des dimensions identiques ou sensiblement identiques et sont agencées côte à côte.

Comme illustré sur la figure 2, le module 51 comprend encore un matériau 7. Le matériau 7 est apte à passer d'une phase liquide à une phase vapeur, et vice versa, selon des conditions de température et/ou de pression. De préférence, le matériau 7 est diélectrique. Le matériau 7 occupe, remplit, un volume V disponible par exemple au-dessus et/ou autour des cellules 2. Alternativement, ou en complément, le volume V s'étend sous les cellules 2, c'est-à-dire entre le fond 8 et les cellules 2.

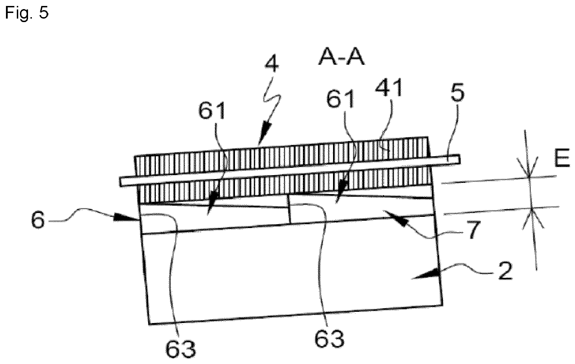

Comme illustré sur les figures 2 à 5, le module 51 comprend encore un condenseur 4. Le condenseur 4 est agencé au sein de l'enceinte 10, de préférence dans la partie supérieure de l'enceinte, par exemple au-dessus des cellules 2. Avantageusement, le condenseur 4 comprend des ailettes 41 (voir figure 5). De préférence, un ou plusieurs conduits ou tuyaux 5 s'étendent au sein du condenseur 4. De tels conduits permettent la circulation d'un liquide, par exemple un liquide destiné à refroidir le condenseur, par exemple un liquide contenant de l'eau.

Comme illustré sur les figures 2 à 5 et 7, le module 51 comprend un moyen de séparation ajouré 6. De préférence, le moyen de séparation ajouré 6 s'étend entre les cellules 2 et le condenseur 4. En cas de condenseur équipé d'ailettes 41, le moyen de séparation est par exemple au contact ou sensiblement au contact des cellules 2 et/ou des ailettes 41.

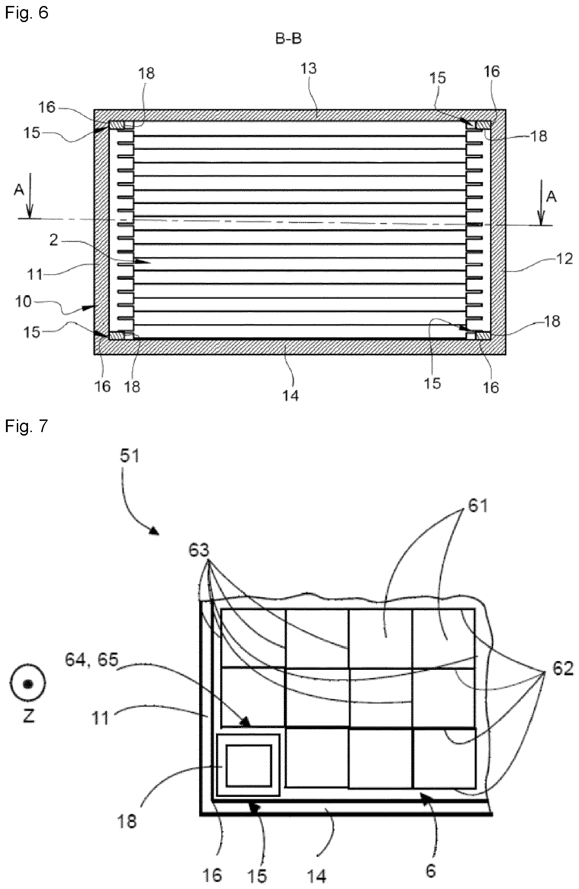

Comme illustré en particulier sur la figure 7, le moyen de séparation ajouré 6 comprend des premières parois 62 et des deuxièmes parois 63 destinées à s'étendre verticalement ou sensiblement verticalement. Avantageusement, les parois 62, 63 s'étendent sur toute une épaisseur E du moyen de séparation ajouré 6 (illustrée sur la figure 5). Ainsi, les parois 62, 63 créent des orifices 61 entre elles de sorte à laisser passer le matériau 7 depuis le dessus des cellules vers le condenseur et vice versa. Autrement dit, le moyen de séparation ajouré est une grille ou sensiblement une grille. A noter que la vue de la figure 7 est une vue du dessus du module 51 sans le couvercle 3 ni le condenseur 4.

De préférence, en particulier en cas d'enceinte 10 parallélépipédique, les premières parois 62 sont orthogonales par rapport aux deuxièmes parois 63. Ainsi, les orifices 61 ont une section carrée et/ou rectangulaire. Avantageusement, les premières parois ou les deuxièmes parois sont parallèles à la première paroi 11 de l'enceinte 10.

Par exemple, le moyen de séparation ajouré 6 a une épaisseur E comprise entre 0.5 mm et 5 mm, en particulier entre 1 mm et 3 mm.

Comme illustré sur la figure 6, en cas d'enceinte 10 parallélépipédique ou sensiblement parallélépipédique, l'enceinte comprend une troisième paroi 13 et une quatrième paroi 14. La troisième paroi 13 et la quatrième paroi 14 sont opposées et parallèles, ou sensiblement parallèles, l'une par rapport à l'autre. De préférence, la première paroi 11 et la deuxième paroi 12 et la troisième paroi 13 et la quatrième paroi 14 et le fond 8 forme une sorte de boîte parallélépipédique ou sensiblement parallélépipédique ouverte sur le dessus (sans paroi supérieure). En effet, avantageusement, comme illustré sur les figures 2 à 4, l'enceinte 10 comprend un couvercle 3 amovible. Le couvercle 3 est destiné à être agencé sur le dessus de la boîte de sorte à fermer l'enceinte 10 par le dessus.

Dans le cas d'une enceinte parallélépipédique, la coupe A-A représentée sur les figures 2 à 5, est réalisée selon un plan parallèle ou sensiblement parallèle aux parois 13, 14. Toujours dans le cas d'une enceinte parallélépipédique, la coupe B-B représentée sur la figure 6 est réalisée selon un plan parallèle ou sensiblement parallèle au fond 8 et/ou au couvercle 3.

Comme illustré sur la figure 2, le module 51 comprend de préférence un joint 9, par exemple un joint plat ou un joint torique, agencé entre le couvercle 3 et l'enceinte 10. En cas de joint torique en particulier, le couvercle 3 comprend par exemple une gorge de réception du joint 9.

Alternativement, ou en complément, des faces supérieures des parois verticales de l'enceinte comprennent une ou des gorges de réception du joint 9.

Comme illustré sur la figure 6, l'enceinte 10 comprend une zone 15 au niveau de chaque arête intérieure 16 destinée à s'étendre verticalement ou sensiblement verticalement. Dans une enceinte parallélépipédique, quatre arêtes 16 s'étendent verticalement au sein de l'enceinte. Ainsi, une zone 15 s'étend le long ou à proximité de chaque arête 16. Chaque zone 15 de l'enceinte 10 est libre. Par « libre », on entend qu'il n'y a pas d'élément à ce niveau, notamment pas de partie de cellule 2, ni de moyen de connexion entre des cellules, ni de moyen de comblement d'espace destiné à limiter le volume de matériau 7 à introduire dans le module. Autrement dit, ces zones 15 au niveau des coins verticaux 16 de l'enceinte sont vides de tout élément qui pourrait empêcher le matériau à changement de phase d'occuper ces zones 15. En d'autres termes, par « libre » ou « vide », on entend ici que seul le matériau à changement de phase est apte à occuper ces zones 15, de même que les coins 64 introduits ci-après. En particulier, le terme « vide » ne doit pas être compris ici comme une absence totale de matière.

Comme il sera détaillé par la suite, les quatre zones 15 facilitent la descente du matériau 7 en phase liquide et/ou la montée du matériau 7 en phase vapeur.

En cas d'enceinte parallélépipédique, le moyen de séparation ajouré 6 est carré ou rectangulaire et a une aire sensiblement égale à l'aire du fond 8.

Toutefois, de préférence, de sorte à laisser libre les zones 15 au sein de l'enceinte, comme illustré sur la figure 7, le moyen de séparation ajouré 6 comprend des coins 64. Chaque coin 64 comprend alors une encoche ou dégagement ou décrochement 65. Par exemple, cette encoche a une forme carré (comme illustré) ou rectangulaire ou a une forme de quart de disque ou sensiblement de quart de disque.

Avantageusement, comme illustré sur les figures 6 et 7, le module 51 comprend encore des conduits ou tubulure ou cheminée ou tube 18. En cas d'enceinte parallélépipédique, un conduit 18 est ménagé au niveau de chaque zone 15. Ainsi, quatre conduits 18 sont prévus. La section d'un conduit 18 selon un plan parallèle au fond 8 est par exemple carrée ou rectangulaire ou encore circulaire ou ovale. Avantageusement, la section du conduit permet de placer le conduit 18 à proximité de l'arête 16, voire contre ou sensiblement contre l'arête 16 et/ou le long du coin formé par l'arête 16. Ainsi, chaque conduit 18 a une section apte à épouser, au moins partiellement, chaque zone 15.

Par exemple, comme illustré sur les figures 2 à 4, le module 51 comprend un ou des moyens de comblement ou garniture ou remplissage 20 destiné à combler les espaces « morts » au sein de l'enceinte de sorte à limiter le volume V de matériau 7 à ajouter. Par exemple, le ou les moyens 20 sont agencés du côté des faces 2A des cellules et/ou du côté des faces 2B des cellules.

A noter que le contact direct entre les cellules et le matériau 7 à changement de phase augmente la performance du système de refroidissement. Le matériau 7 à l'état liquide en contact avec les cellules chaudes s'évapore en refroidissant ainsi les cellules. La vapeur est ensuite condensée sur une paroi froide et retombe dans le pack à cellules comme il sera décrit par la suite.

Par exemple, lors du démarrage du véhicule, un liquide froid, par exemple de l'ordre de 20 à 25 degrés Celsius, est envoyé dans les conduites 5 de sorte à refroidir le condenseur 4 et faire condenser la vapeur au niveau du condenseur. La condensation de la vapeur fait baisser la pression dans le module, cette diminution de pression crée une évaporation du liquide dans le module, l'évaporation prend la chaleur du module et des cellules, et diminue la température de cellules et du liquide dans le module.

Comme évoqué, le condenseur 4, comprenant de préférence les ailettes 41 et les tubes ou tuyaux 5, se trouve au-dessus des cellules 2 à refroidir, seule la grille 6 est intercalée entre la face supérieure des cellules et le bas des ailettes du condenseur. Ainsi, les vapeurs créées à l'interface entre les cellules 2 et le matériau diélectrique 7 se retrouvent immédiatement en contact avec les ailettes 41 du condenseur.

La solution permet d'une part de réduire le volume du liquide 7 à l'intérieur du pack et d'autre part d'augmenter la compacité du module 51. Cette compacité du module permet de réduire l'encombrement de la batterie et/ou d'augmenter le nombre de modules composant une batterie pour un encombrement donné. En effet, le moyen de séparation de type grille 6 permet de conserver du liquide 7 au-dessus des cellules quelle que soit l'inclinaison du véhicule, notamment d'inclinaison liée à une accélération ou une décélération (freinage notamment) ou la force centrifuge due à un virage. En outre, en cas de pente ascendante ou descendante de la chaussée, le moyen de séparation de type grille 6 permet de conserver du matériau 7 au-dessus des cellules 2. En effet, les premières parois 62 et/ou les deuxièmes parois 63 retiennent le matériau et l'empêche d'aller quasi intégralement par exemple vers la première paroi 11 ou vers la deuxième paroi 12 ou vers la troisième paroi 13 ou vers la quatrième paroi 14. Les orifices 61 résultant de la présence des parois 62, 63 de la grille 6 créent des réceptacles ou récipients ou cavités pour le matériau 7. De tels cavités ont pour fond le dessus d'une ou plusieurs cellules ou encore plusieurs dessus de cellules adjacentes. Autrement dit, le non mouillage du dessus des cellules par le matériau 7 est évité, du liquide demeurant sur l'ensemble de la surface haute des cellules, même si cette surface est très grande. La capacité de refroidissement des cellules du module résultant de la présence du matériau 7 constamment au-dessus de cellules est améliorée.

Pour rappel, de préférence les cellules sont parallélépipédiques et agencées côte à côte de sorte à laisser peu, voire pas, de jeu entre elles. De la même manière, peu de jeu, voire un jeu nul ou sensiblement nul, est prévu entre une cellule longeant la troisième paroi 13 et cette troisième paroi 13. De la même manière, peu de jeu, voire un jeu nul ou sensiblement nul, est prévu entre une cellule longeant la quatrième paroi 14 et cette quatrième paroi 14.

En résumé, grâce au moyen de séparation ajouré entre le condenseur et les cellules, le volume V de matériau 7 à introduire dans le module est réduit tout en assurant un recouvrement constant du dessus des cellules par le matériau 7 malgré les différentes inclinaisons de la batterie 52 agencée au sein du véhicule 1.

Le moyen de séparation permet encore de réduire la hauteur du module, le condenseur pouvant être rapproché au maximum des cellules. En effet, seule la grille 6 est interposée. Pour rappel, de préférence, la grille a une épaisseur E très faible, par exemple comprise entre 1 mm et 3 mm. Ainsi, peu de matériau 7 est nécessaire pour recouvrir intégralement les cellules (par exemple les immerger) et ce, sans devoir augmenter la hauteur du module.

Ainsi, la vapeur créée à l'interface entre les cellules électriques 2 et le matériau diélectrique 7 remonte aisément par la flottabilité et est immédiatement, ou sensiblement immédiatement, en contact avec les ailettes 41 du condenseur 4.

Outre la fonction de permettre de garder les cellules recouvertes de matériau 7 quelle que soit l'inclinaison de la batterie (celle du véhicule lorsqu'elle équipe un véhicule), le moyen de séparation 6 permet de protéger les cellules 2 des ailettes 41 du condenseur. Ainsi, les ailettes qui sont de préférence très fines, et s'étendent verticalement ou sensiblement verticalement, ne peuvent pas abîmer le dessus des cellules. De plus, le moyen de séparation ajouré 6 joue un rôle d'entretoise en permettant de conserver une distance constante entre le condenseur et les cellules, et comme vu précédemment, de créer une faible couche du matériau d'une épaisseur équivalente à l'épaisseur de la grille 6, par exemple de 1 mm à 3 mm. Les orifices 61 et/ou les parois 62, 63 de la grille facilitent la remontée des vapeurs du matériau 7 vaporisé et/ou facilitent la descente du matériau 7 à l'état liquide, c'est-à-dire après la condensation de la vapeur.

Avantageusement, comme illustré sur la figure 2, le matériau 7 est en contact des flancs ou faces 2A, 2B des cellules de sorte à les refroidir. Dans ce cas, de préférence, un ou des moyens de comblement 20, de préférence obtenu dans un matériau léger, bouchent des zones vides tout en laissant des jeux compris par exemple entre 2 mm et 1 0mm, notamment autour des cellules. Là encore, on vise à diminuer le volume de matériau 7 à ajouter dans le module.

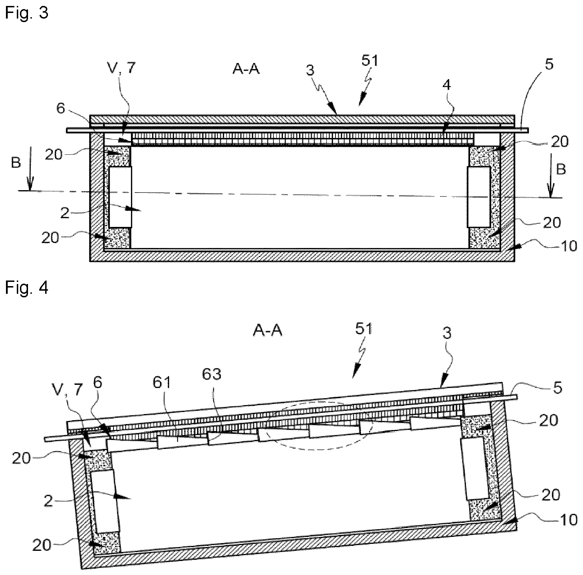

Alternativement, en variante illustrée sur les figures 3 et 4, le moyen de comblement 20 s'étend en vis-à-vis des faces 2A, 2B des cellules de sorte que le matériau 7 ne vienne pas, ou sensiblement pas, au contact de ces faces 2A, 2B. Dans ce cas, le matériau 7 n'est présent qu'au-dessus des cellules, seul le dessus est alors refroidi.

Grâce aux conduits 18, la montée de la vapeur du matériau 7 est favorisée et la descente du matériau 7 à l'état liquide est également favorisée. L'emplacement de ces conduits, aux quatre coins dans une enceinte parallélépipédique, optimise ces flux. En effet, ces quatre coins ou zones 15 sont froides comparées aux autres zones de l'enceinte, en particulier parce qu'il n'y a pas de chaleur directe émanant des cellules.

A noter que la proximité de chaque conduit 18 avec chaque arête 16 et/ou chaque paroi adjacente (paroi 11 et paroi 13, ou paroi 13 et paroi 12, ou paroi 12 et paroi 14 ou paroi 14 et paroi 11), voire leur contact, vise là encore à limiter les espaces « morts » et éviter un remplissage de ces espaces par le matériau 7.

La solution permet de réduire grandement le volume de matériau de refroidissement à changement de phase engendrant une réduction des coûts ainsi qu'une réduction de la hauteur du module. Comme vu précédemment, la solution rend possible une capacité de stockage ou volume V de matériau 7 particulièrement faible. Le matériau 7 étant onéreux et ayant une forte densité, il en résulte une économie et un gain de masse pour chaque module, et par conséquent pour la batterie utilisant un ou plusieurs modules de ce type.

La solution est particulièrement adaptée pour un module de batterie de véhicule électrique ou hybride ou encore comprenant un moteur thermique équipé d'une batterie, notamment de tension de l'ordre de 48 V. Alternativement, la solution peut être utilisée dans une batterie destinée à être stationnaire ou au sein d'une centrale de production d'électricité.

En remarque, la solution selon l'invention atteint donc l'objectif recherché de diminuer l'encombrement d'un module d'une batterie, en particulier selon la direction verticale, et présente les avantages suivants :
- elle est économique ;
- elle est facile à mettre en oeuvre ;
- elle peut être appliquée dans d'autres véhicules utilisant une batterie de stockage d'électricité, tels que des véhicules agricoles, engins de chantiers, ou encore des véhicules à deux roues, trois roues ou de type quad.

## Revendications

1. Module (51) pour une batterie (52), le module (51) comprenant :
- une enceinte (10),
- des cellules (2) au sein de l'enceinte (10),
- un condenseur (4), le condenseur (4) étant agencé au sein de l'enceinte (10) au-dessus des cellules (2),
- un matériau (7) apte à passer d'une phase liquide à une phase vapeur et vice versa selon des conditions de température et/ou de pression, notamment un matériau (7) diélectrique, le matériau (7) occupant un volume (V) disponible au sein de l'enceinte (10), notamment au-dessus et/ou autour des cellules (2),
**caractérisé en ce que** le module (51) comprend un moyen de séparation ajouré (6) s'étendant entre les cellules (2) et le condenseur (4).

2. Module (51) selon la revendication précédente, **caractérisé en ce que** le moyen de séparation ajouré (6) comprend des premières parois (62) et des deuxièmes parois (63) destinées à s'étendre verticalement ou sensiblement verticalement, notamment sur toute une épaisseur (E) du moyen de séparation ajouré (6), de sorte à créer des orifices (61) entre les premières et deuxièmes parois (62, 63).

3. Module (51) selon la revendication précédente, **caractérisé en ce que** les premières parois (62) sont orthogonales par rapport aux deuxièmes parois (63) entre elles de sorte que les orifices (61) ont une section carrée et/ou rectangulaire.

4. Module (51) selon l'une des revendications précédentes, **caractérisé en ce que** le moyen de séparation ajouré (6) a une épaisseur (E) comprise entre 0.5 mm et 5 mm, notamment entre 1 mm et 3 mm.

5. Module (51) selon l'une des revendications précédentes, **caractérisé en ce que** l'enceinte (10) comprend une zone (15) au niveau de chaque arête intérieure (16) destinée à s'étendre verticalement ou sensiblement verticalement et **en ce que** chaque zone (15) de l'enceinte (10) est libre de sorte à faciliter la descente du matériau (7) en phase liquide, et la montée du matériau (7) en phase vapeur.

6. Module (51) selon la revendication précédente, **caractérisé en ce que** le moyen de séparation ajouré (6) comprend des coins (64), chaque coin (64) comprenant une encoche (65) destinée à laisser libre chaque zone (15) de l'enceinte (10).

7. Module (51) selon l'une des revendications 5 ou 6, **caractérisé en ce que** le module (51) comprend des conduits (18), chaque conduit (18) étant ménagé au niveau de chaque zone (15) de sorte à faciliter le déplacement du matériau (7) vers le haut et/ou vers le bas du module (51).

8. Module (51) selon la revendication précédente, **caractérisé en ce que** chaque conduit (18) a une section selon un plan horizontal apte à épouser chaque zone (15), notamment une section carrée ou rectangulaire.

9. Batterie (52), **caractérisée en ce qu'**elle comprend au moins un module (51) selon l'une des revendications précédentes.

10. Véhicule, notamment véhicule automobile (1), **caractérisé en ce qu'**il comprend une batterie (52) selon la revendication précédente, ou un module (51) selon l'une des revendications 1 à 8.
